# EUROPEAN PATENT APPLICATION

(11) **EP 4 696 572 A1**
(43) Date of publication of application: **18.02.2026**
(21) Application number: 24915210.9
(22) Date of filing: 27.12.2024
(51) Int. Cl.: B60W 10/06, B60W 10/08, B60W 10/18, B60W 40/00

(54) **TORQUE PRIORITY ARBITRATION METHOD, TORQUE CONTROL SERVICE SYSTEM AND VEHICLE**

(30) Priority: 04.01.2024 CN 202410018352
(71) Applicant: Chongqing Changan Automobile Co., Ltd., Chongqing 400023 (CN)
(72) Inventor: HE, Yihua, Chongqing 400023 (CN)
(74) Representative: Noréns Patentbyrå AB
(86) International application number: PCT/CN2024/143418
(87) International publication number: WO 2025/145996

(57) **Abstract**

A torque priority arbitration method, a torque control service system, and a vehicle. The torque priority arbitration method comprises the following steps: acquiring the current torque demand of a vehicle in a driving state, matching a preset demand torque scenario, and activating one or more demand torque scenarios; on the basis of a preset priority, preset demand torque and preset torque arbitration operation relationship of each demand torque scenario, calculating and outputting a final arbitration result; and, according to the arbitration result, controlling the vehicle to perform corresponding torque control.

## Description

### CROSS-REFERENCE TO RELATED APPLICATIONS

The present invention claims priority to the Chinese Patent Application No. 202410018352.3, submitted to the China National Intellectual Property Administration on January 4, 2024, and entitled "TORQUE PRIORITY ARBITRATION METHOD, TORQUE CONTROL SERVICE SYSTEM AND VEHICLE", the entire contents of which are incorporated herein by reference.

### TECHNICAL FIELD

The present invention relates to the field of torque control technology, and in particular to a method for torque priority arbitration, a system for torque control service, and a vehicle.

### BACKGROUND OF THE INVENTION

Currently, torque control in vehicles is relatively decentralized. In electronic and electrical architectures, driving and braking are still controlled separately by two controllers, and independently controlled by an original equipment manufacturer and a supplier, respectively, with coordination control mainly performed by the supplier. Research on software architectures and control methods primarily focuses on an accelerator, a drive motor, and related aspects. Coordination between driving and braking is mostly concentrated on the study of hill start assist functions, with very little research on the service-oriented design of torque control.

Torque control is the core of control authority management strategies. In the prior art, some arbitration logics for a plurality of torque requests in torque control have emerged. By setting preset priorities and an arbitration logic, a demand torque for controlling the motor is ultimately output according to an arbitration result, providing a feasible method for multi-source torque arbitration in a vehicle controller. Alternatively, by a service priority arbitration logic, priority relationships of various demand torques are clearly listed, and arbitration is performed according to priorities.

However, with the continuous development of industry technology, the above-mentioned technologies have been unable to meet the demand for centralized torque control of a centralized controller for driving and braking. A simple service-oriented arbitration logic based on priorities is unable to adapt to and meet the demand of more specialized and detailed control in current torque control.

### SUMMARY OF THE INVENTION

A first objective of the present invention is to provide a method for torque priority arbitration, to solve the problem that the arbitration logic for a torque request in the prior art cannot adapt to and meet more specialized and detailed control demands in the current torque control. A second objective of the present invention is to provide a system for torque control service. A third objective of the present invention is to provide a vehicle.

To achieve the above-mentioned objectives, the technical solution adopted by the present invention is as follows.

A method for torque priority arbitration, including the following steps:
obtaining a current torque demand of a vehicle in a driving state, matching a preset demand torque scenario, and activating one or more demand torque scenarios;
calculating and outputting a final arbitration result based on a preset priority, a preset demand torque, and a preset torque arbitration operational relationship of each demand torque scenario, where a torque arbitration operational relationship between demand torque scenarios with the same priority represents an operational relationship between the demand torque scenario and another demand torque scenario with the same priority, and a torque arbitration operational relationship between demand torque scenarios with different priorities represents an operational relationship between a result of a same-precedence operation with the priority and a result of a same-precedence operation with a lower priority; directly outputting an arbitration result in a case where only one demand torque scenario is activated; and sequentially executing torque arbitration operational relationships with different priorities from high to low in a case where at least one demand torque scenario is activated, where the result of the same-precedence operation with the priority is calculated by the torque arbitration operational relationship between different demand torque scenarios with the same priority, and the final arbitration result is calculated and output by substituting the result of the same-precedence operation into calculation of the torque arbitration operational relationship between different priorities; and
controlling, according to the arbitration result, the vehicle to perform corresponding torque control.

It is to be noted that the driving state involved in the present invention refers to the vehicle being in an engine start state, including, but not limited to, states where a demand torque may occur and exist, such as parking, driving, and braking. In a conventional arbitration method, arbitration is simply performed according to priorities or the order of corresponding requests. Demand of a demand torque scenario with a high priority is executed first in a case where there are demand torque scenarios with different priorities, and a demand torque scenario that is first required or input is preferentially responded to and output in a case where there are demand torque scenarios with the same priority. Such conventional arbitration method has a simple judgment logic and is unable to handle situations such as selection, superposition, and neutralization of a plurality of scenarios, has poor arbitration accuracy, and the arbitration conclusion is unable to adequately cope with complex scenario demand situations. The present invention presets how to use preset torque arbitration operational relationships between demand torque scenarios with the same priority and between demand torque scenarios with different priorities, and utilizes the preset torque arbitration operational relationships to perform operations between the demand torque scenarios with the same priority and between the demand torque scenarios with different priorities, such that the situations such as selection, superposition, and neutralization of a plurality of scenarios may be handled. The method for torque priority arbitration of the present invention may respond to multi-scenario torque control more flexibly, provide more detailed arbitration possibilities for the situations such as selection, superposition, and neutralization of a plurality of scenarios, meet the arbitration demands of various operations such as torque summation, subtraction, maximum, and minimum in the current torque control, and also provide an effective arbitration mode for free arrangement of a plurality of scenarios.

Further, levels of the preset priorities are represented by natural numbers, the larger a numeral value, the higher a level of a priority, and in a case where a numeral value of a priority of a demand torque scenario is 0, it is indicated that the priority of the demand torque scenario is the lowest, and a torque arbitration operational relationship corresponding to the demand torque scenario does not participate in calculation.

In this way, in a case where there is a demand torque scenario with a priority of 0 and there are a plurality of demand torque scenarios, the torque arbitration operational relationship corresponding to the demand torque scenario with a priority of 0 may be ignored. The arbitration result corresponding to the demand torque scenario is output in a case where only the demand torque scenario with a priority of 0 is input. Alternatively, the torque arbitration operational relationship between the demand torque scenario and another demand torque scenario is executed and calculated, and the calculated arbitration result is output, in a case where a plurality of demand torque scenarios with a priority of 0 are input.

Further, the preset torque arbitration operational relationship includes: none, summation (+), subtraction (-), minimum (MIN), and maximum (MAX). None indicates that there is no further operational relationship between a result of a same-precedence operation of the demand torque scenario with the priority and a result of a same-precedence operation of a demand torque scenario with a lower priority, summation (+) indicates a summation operation between different demand torque scenarios or different priorities, subtraction (-) indicates a subtraction operation between different demand torque scenarios or different priorities, minimum (MIN) indicates a minimum operation between different demand torque scenarios or different priorities, and maximum (MAX) indicates a maximum operation between different demand torque scenarios or different priorities. A torque arbitration operational relationship between different demand torque scenarios with the same priority is set to be none and/or summation (+), subtraction (-), minimum (MIN), or maximum (MAX).

It is to be noted that, to avoid conflicts such as simultaneous summation and subtraction operations in demand torque scenarios with the same priority, it is limited that in a case where there are different demand torque scenarios with the same priority, a torque arbitration operational relationship between different demand torque scenarios may only be set as none, a single operational relationship, or none and another single operational relationship. This prevents operational conflicts and may ensure the smooth progression of arbitration operations.

Further, the preset demand torque scenario originates from an accelerator demand torque, a creep demand torque, a coasting demand torque, a braking feedback demand torque, an autonomous driving demand torque, an intelligent steering demand torque, a hill assist demand torque, a parking assist demand torque, a maximum demand torque set by a driver, a maximum demand torque limited by a vehicle speed, and a demand torque limited by a motor battery. The range of scenario sources is broad, including scenarios where a torque demand exists and where a torque currently needs to be quantitatively set.

Further, the preset demand torque includes a distribution ratio of torques of front and rear axles and a total wheel-end demand torque.

Further, the arbitration result includes a value of an output demand torque, a name of a scenario with the highest priority, and a priority level.

A system for torque control service includes a scenario preset module, a torque control module, and a power execution module, with signals transmitted sequentially. A plurality of demand torque scenarios and a scenario name, a priority level, and a demand torque corresponding to each demand torque scenario are set in the scenario preset module. The torque control module obtains an arbitration result by calculation using the above-mentioned method for torque priority arbitration, and the arbitration result is output to the power execution module for execution.

Further, the power execution module includes an engine controller, a motor controller, and a hydraulic brake controller.

The matching and activation of demand torque scenarios rely on accelerator and brake signals. The scenario demand currently faced by the vehicle may be preliminarily determined by the accelerator and brake signals, such that one or more set demand torque scenarios are activated. One or more demand torque scenarios are input into the torque control module for priority arbitration, and the arbitration result calculated using the method for torque priority arbitration is output.

Further, the torque control module further includes a control request interface for a total wheel-end demand torque and a control request interface for wheel-end torques of front and rear axles. The control request interface for the total wheel-end demand torque and the control request interface for the wheel-end torques of the front and rear axles are used to obtain a current torque demand of a vehicle in a driving state. The torque control module may determine, according to the accelerator and brake signals, a possible demand torque scenario which the vehicle may be in, such that information of the corresponding demand torque scenario is activated.

A vehicle includes the above-mentioned system for torque control service.

Beneficial effects of the present invention are as follows. The method for torque priority arbitration of the present invention may respond to multi-scenario torque control more flexibly, provide more detailed arbitration possibilities for the situations such as selection, superposition, and neutralization of a plurality of scenarios, meet the arbitration demands of various operations such as torque summation, subtraction, maximum, and minimum in the current torque control, and also provide an effective arbitration mode for free arrangement of a plurality of scenarios.

### BRIEF DESCRIPTION OF DRAWINGS

FIG. 1 is a flowchart of steps of a method for torque priority arbitration of the present invention.
FIG. 2 is a schematic diagram of arbitration using a conventional arbitration method.
FIG. 3 is a schematic diagram of arbitration using a method for torque priority arbitration of the present invention.
FIG. 4 is a schematic diagram of system modules in a system for torque control service of the present invention.
FIG. 5 is a schematic diagram of a specific arbitration example for a torque control module of the present invention.
FIG. 6 is a schematic diagram of an EE architecture for centralized torque control using a system for torque control service of the present invention.

### DETAILED DESCRIPTION OF THE INVENTION

Implementations of the present invention are described below with reference to the accompanying drawings and preferred embodiments. Those skilled in the art may easily understand other benefits and effects of the present invention from the disclosed content of the specification. The present invention may further be implemented or applied by other different specific implementations, and various modifications or changes may be made to the details in the specification based on different viewpoints and applications without departing from the spirit of the present invention. It is to be understood that the preferred embodiments are merely for describing the present invention, and are not intended to limit the scope of protection of the present invention.

It is to be noted that illustrations provided in the following embodiments are merely schematic representations to explain the basic concept of the present invention. Hence, the illustrations simply show components related to the present invention and are not drawn according to the quantity, shape, and size of the components in a practical implementation. The practical implementation may involve arbitrary changes in the type, quantity, and proportion of the components, and the layout type of the components may also be more complex.

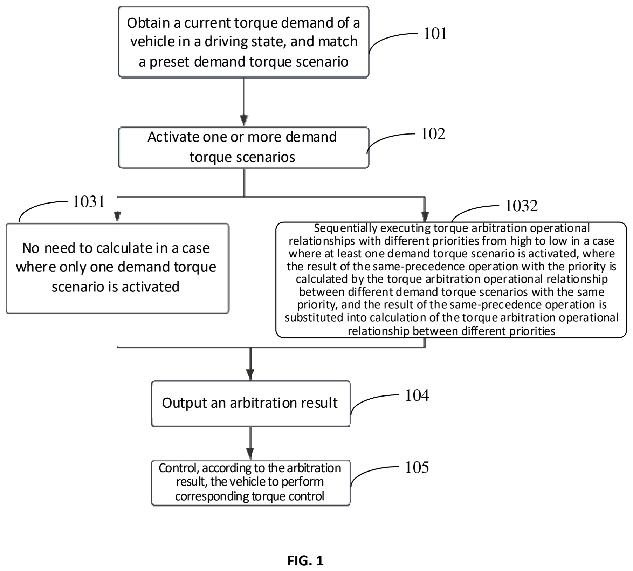

As shown in FIG. 1, an embodiment proposes a method for torque priority arbitration, including steps S101 to S105.

In steps S101 and S102, a current torque demand of a vehicle in a driving state is obtained, a preset demand torque scenario is matched, and one or more demand torque scenarios are activated.

In steps S1031 to S104, a final arbitration result is calculated and output based on a preset priority, a preset demand torque, and a preset torque arbitration operational relationship of each demand torque scenario. A torque arbitration operational relationship between demand torque scenarios with the same priority represents an operational relationship between the demand torque scenario and another demand torque scenario with the same priority, and a torque arbitration operational relationship between demand torque scenarios with different priorities represents an operational relationship between a result of a same-precedence operation with the priority and a result of a same-precedence operation with a lower priority. An arbitration result is directly output in a case where only one demand torque scenario is activated, and torque arbitration operational relationships with different priorities are sequentially executed from high to low in a case where at least one demand torque scenario is activated. The result of the same-precedence operation with the priority is calculated by the torque arbitration operational relationship between different demand torque scenarios with the same priority, and the final arbitration result is calculated and output by substituting the result of the same-precedence operation into the calculation of the torque arbitration operational relationship between different priorities.

In step S105, the vehicle is controlled, according to the arbitration result, to perform corresponding torque control.

In the embodiment, levels of the preset priorities are represented by natural numbers, the larger a numeral value, the higher a level of a priority, and in a case where a numeral value of a priority of a demand torque scenario is 0, it is indicated that the priority of the demand torque scenario is the lowest, and a torque arbitration operational relationship corresponding to the demand torque scenario does not participate in calculation.

In this way, in a case where there is a demand torque scenario with a priority of 0 and there are a plurality of demand torque scenarios, the torque arbitration operational relationship corresponding to the demand torque scenario with a priority of 0 may be ignored. The arbitration result corresponding to the demand torque scenario is output in a case where only the demand torque scenario with a priority of 0 is input. Alternatively, the torque arbitration operational relationship between the demand torque scenario and another demand torque scenario is executed and calculated, and the calculated arbitration result is output, in a case where a plurality of demand torque scenarios with a priority of 0 are input.

In the embodiment, the preset torque arbitration operational relationship includes: none, summation (+), subtraction (-), minimum (MIN), and maximum (MAX). None indicates that there is no further operational relationship between a result of a same-precedence operation of the demand torque scenario with the priority and a result of a same-precedence operation of a demand torque scenario with a lower priority, summation (+) indicates a summation operation between different demand torque scenarios or different priorities, subtraction (-) indicates a subtraction operation between different demand torque scenarios or different priorities, minimum (MIN) indicates a minimum operation between different demand torque scenarios or different priorities, and maximum (MAX) indicates a maximum operation between different demand torque scenarios or different priorities. A torque arbitration operational relationship between different demand torque scenarios with the same priority is set to be none and/or summation (+), subtraction (-), minimum (MIN), or maximum (MAX).

It is to be noted that, to avoid conflicts such as simultaneous summation and subtraction operations in demand torque scenarios with the same priority, it is limited that in a case where there are different demand torque scenarios with the same priority, a torque arbitration operational relationship between different demand torque scenarios may only be set as none, a single operational relationship, or none and another single operational relationship. This prevents operational conflicts and may ensure the smooth progression of arbitration operations.

In the embodiment, the preset demand torque scenario originates from an accelerator demand torque, a creep demand torque, a coasting demand torque, a braking feedback demand torque, an autonomous driving demand torque, an intelligent steering demand torque, a hill assist demand torque, a parking assist demand torque, a maximum demand torque set by a driver, a maximum demand torque limited by a vehicle speed, and a demand torque limited by a motor battery. The range of scenario sources is broad, including scenarios where a torque demand exists and where a torque currently needs to be quantitatively set.

In the embodiment, the preset demand torque includes a distribution ratio of torques of front and rear axles and a total wheel-end demand torque.

In the embodiment, the arbitration result includes a value of an output demand torque, a name of a scenario with the highest priority, and a priority level.

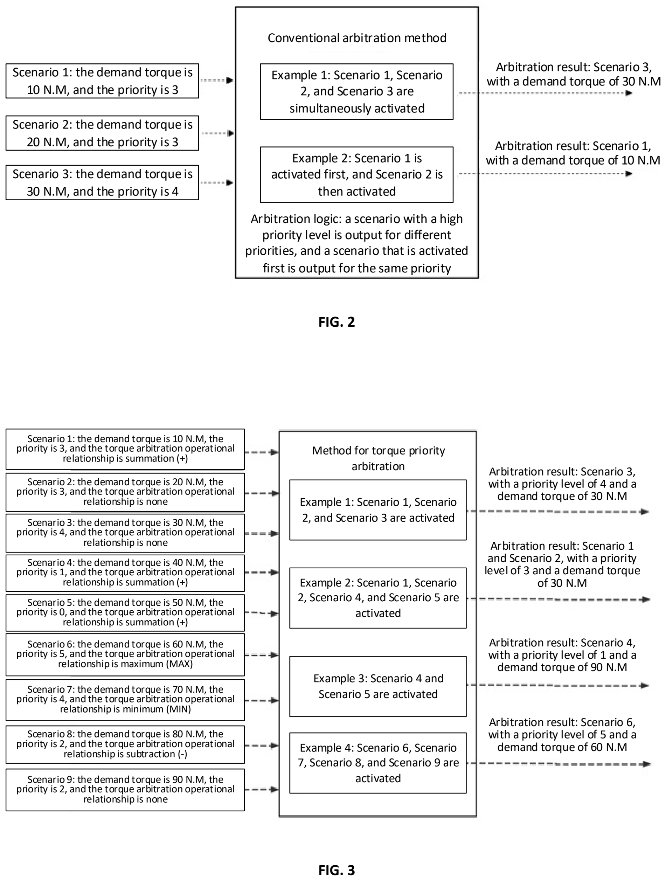

As shown in FIG. 2, in a conventional arbitration method, arbitration is simply performed according to priorities or the order of corresponding requests. Demand of a demand torque scenario with a high priority is executed first in a case where there are demand torque scenarios with different priorities, and a demand torque scenario that is first required or input is preferentially responded to and output in a case where there are demand torque scenarios with the same priority. Such conventional arbitration method has a simple judgment logic and is unable to handle situations such as selection, superposition, and neutralization of a plurality of scenarios, has poor arbitration accuracy, and the arbitration conclusion is unable to adequately cope with complex scenario demand situations.

In the conventional arbitration method shown in FIG. 2, the following scenarios are defined.

Scenario 1: the demand torque is 10 N.M, and the priority is 3.

Scenario 2: the demand torque is 20 N.M, and the priority is 3.

Scenario 3: the demand torque is 30 N.M, and the priority is 4.

The arbitration logic of the conventional arbitration method is as follows. A demand of a scenario with a high priority is executed first in a case where there are scenarios with different priorities, and a scenario that is input first is preferentially output in a case where there are scenarios with the same priority.

As shown in FIG. 2, in a case where Scenario 1, Scenario 2, and Scenario 3 are activated, the priority level of Scenario 3 is the highest, and the output demand torque is 30 N.M. In a case where Scenario 1 and Scenario 2 are input, since the levels of Scenario 1 and Scenario 2 are the same, but Scenario 1 is demanded first, the output demand torque is 10 N.M. Such conventional arbitration method has a simple judgment logic, and the simple service-oriented arbitration logic based on priorities is unable to adapt to and meet the demand of more specialized and detailed control in current torque control.

As shown in FIG. 3, a schematic diagram of the method for torque priority arbitration of the embodiment is illustrated. Specifically, the following scenarios are defined.

Scenario 1: the demand torque is 10 N.M, the priority level is 3, and the torque arbitration operational relationship is summation (+).

Scenario 2: the demand torque is 20 N.M, the priority level is 3, and the torque arbitration operational relationship is none.

Scenario 3: the demand torque is 30 N.M, the priority level is 4, and the torque arbitration operational relationship is none.

Scenario 4: the demand torque is 40 N.M, the priority level is 1, and the torque arbitration operational relationship is summation (+).

Scenario 5: the demand torque is 50 N.M, the priority level is 0, and the torque arbitration operational relationship is summation (+).

Scenario 6: the demand torque is 60 N.M, the priority level is 5, and the torque arbitration operational relationship is maximum (MAX).

Scenario 7: the demand torque is 70 N.M, the priority level is 4, and the torque arbitration operational relationship is minimum (MIN).

Scenario 8: the demand torque is 80 N.M, the priority level is 2, and the torque arbitration operational relationship is subtraction (-).

Scenario 9: the demand torque is 90 N.M, the priority level is 2, and the torque arbitration operational relationship is none.

As shown in FIG. 3, in a case where Scenario 1, Scenario 2, and Scenario 3 are activated, the torque arbitration operational relationships with different priorities are executed sequentially from high to low according to the method for torque priority arbitration. It can be known that both the priority levels of Scenario 1 and Scenario 2 are 3, and the priority level of Scenario 3 is 4. Hence, the torque arbitration operational relationship of Scenario 3 is executed first. The torque arbitration operational relationship of Scenario 3 is none, which means that there is no further operational relationship between an operational result of a scenario with the priority and an operational result of a scenario with a lower priority. As a result, the torque arbitration operational relationship with a priority level lower than 4 does not need to be executed. In such case, although both of the priority levels of Scenario 1 and Scenario 2 are 3, no operation is performed between them and the scenario with a priority level of 4. Hence, the result of the same-precedence operation with a priority level of 3 does not need to be substituted into the torque arbitration operational relationship with a priority level of 4. Consequently, the output demand torque = Scenario 3 = 30 N.M, and the final output arbitration result is Scenario 3, with a priority level of 4 and a demand torque of 30 N.M.

As shown in FIG. 3, in a case where Scenario 1, Scenario 2, Scenario 4, and Scenario 5 are activated, the torque arbitration operational relationships with different priorities are executed sequentially from high to low according to the method for torque priority arbitration. It can be known that both the priority levels of Scenario 1 and Scenario 2 are 3, the priority level of Scenario 4 is 1, and the priority level of Scenario 5 is 0. Hence, the torque arbitration operational relationship with a priority level of 3 is executed first. In the two scenarios with a priority level of 3, the torque arbitration operational relationship of Scenario 2 is none, which means that there is no further operational relationship between an operational result of a scenario with the priority and an operational result of a scenario with a lower priority. As a result, the torque arbitration operational relationship for the result of the same-precedence operation with a priority level lower than 3 does not need to be executed. In such case, only the torque arbitration operational relationships of the two scenarios with a priority level of 3 need to be calculated. The torque arbitration operational relationship of Scenario 1 is summation (+), and thus the torques of Scenario 1 and Scenario 2 are summed. Hence, the output demand torque = Scenario 1 + Scenario 2 = 10 N.M + 20 N.M = 30 N.M, and the final output arbitration result is Scenario 1 and Scenario 2, with a priority level of 3 and a torque demand of 30 N.M.

As shown in FIG. 3, in a case where Scenario 4 and Scenario 5 are activated, the torque arbitration operational relationships with different priorities are executed sequentially from high to low according to the method for torque priority arbitration. It can be known that the priority level of Scenario 4 is 1. Hence, the torque arbitration operational relationship with a priority level of 1 is executed first. The torque arbitration operational relationship of Scenario 4 is summation (+), which means that Scenario 4 and Scenario 5 need to be summed. The priority of Scenario 5 is 0. It is known that the torque arbitration operational relationship corresponding to a scenario with a priority of 0 may be ignored in a case of the scenario with a priority of 0. Hence, the torque arbitration operational relationship of Scenario 5 does not need to be considered, and the torques of Scenario 4 and Scenario 5 are finally summed. As a result, the output demand torque = Scenario 4 + Scenario 5 = 40 N.M + 50 N.M = 90 N.M, and the final output arbitration result is Scenario 4, with a priority level of 1 and a torque demand of 90 N.M.

As shown in FIG. 3, in a case where Scenario 6, Scenario 7, Scenario 8, and Scenario 9 are activated, the torque arbitration operational relationships with different priorities are executed sequentially from high to low according to the method for torque priority arbitration. It can be known that the priority level of Scenario 6 is 5, which is the highest among the four scenarios. Hence, the torque arbitration operational relationship with a priority level of 5 is executed first. The torque arbitration operational relationship of Scenario 6 is maximum (MAX), and thus a maximum operation is performed between the result of the same-precedence operation with a priority level of 5 and the result of the same-precedence operations with other remaining priorities lower than 5. It can be known that the priority of Scenario 7 is 4 and the torque arbitration operational relationship of Scenario 7 is minimum (MIN), and thus a minimum operation is performed between the result of the same-precedence operation with a priority level of 4 and the result of the same-precedence operations with other remaining priorities lower than 4. It is known that both the priority levels of Scenario 8 and Scenario 9 are 2 and there are no scenarios with a priority level lower than 2, the torque arbitration operational relationship of Scenario 8 is subtraction (-), and the torque arbitration operational relationship of Scenario 9 is none. Hence, a subtraction operation is performed between Scenario 8 and Scenario 9. According to the method for torque priority arbitration and the above-mentioned hierarchical sequential calculations, the output demand torque = MAX {Scenario 6, MIN (Scenario 7, Scenario 8 - Scenario 9)} = MAX {60N.M, MIN (70N.M, 90N.M - 80N.M)} = 60N.M, and the final output arbitration result is Scenario 6, with a priority level of 5 and a torque demand of 60 N.M.

The benefits of the embodiment are as follows. The present invention presets how to use preset torque arbitration operational relationships between demand torque scenarios with the same priority and between demand torque scenarios with different priorities, and utilizes the preset torque arbitration operational relationships to perform operations between the demand torque scenarios with the same priority and between the demand torque scenarios with different priorities, such that the situations such as selection, superposition, and neutralization of a plurality of scenarios may be handled. The method for torque priority arbitration may respond to multi-scenario torque control more flexibly, provide more detailed arbitration possibilities for the situations such as selection, superposition, and neutralization of a plurality of scenarios, meet the arbitration demands of various operations such as torque summation, subtraction, maximum, and minimum in the current torque control, and also provide an effective arbitration mode for free arrangement of a plurality of scenarios.

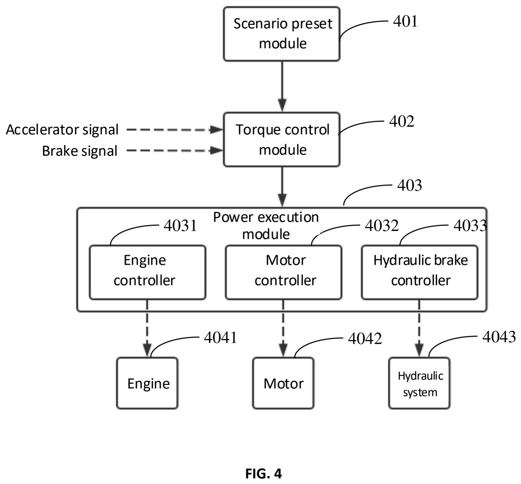

As shown in FIG. 4, an embodiment further proposes a system for torque control service, including a scenario preset module 401, a torque control module 402, and a power execution module 403, with signals transmitted sequentially. A plurality of demand torque scenarios and a scenario name, a priority level, and a demand torque corresponding to each demand torque scenario are set in the scenario preset module 401. The torque control module 402 matches and activates one or more demand torque scenarios from the scenario preset module 401 based on current accelerator and brake signals of a vehicle. Information on one or more activated demand torque scenarios is input into the torque control module 402. The torque control module 402 obtains an arbitration result by calculation using the above-mentioned method for torque priority arbitration, and the arbitration result is output to the power execution module 403 for execution.

As shown in FIG. 4, the power execution module 403 includes an engine controller 4031, a motor controller 4032, and a hydraulic brake controller 4033.

The demand torque needed by the vehicle during driving may be reflected from the accelerator and brake signals. The torque control module 402 may determine, according to the accelerator and brake signals, a possible demand torque scenario which the vehicle may be in, such that information of the corresponding demand torque scenario is activated. Corresponding data is retrieved from data of the preset demand torque scenario in the scenario preset module 401. Data of the selected and activated demand torque scenario is extracted and input into the torque control module 402 for priority arbitration. The torque control module 402 then outputs the arbitration result calculated using the method for torque priority arbitration to the power execution module 403 for execution. The means for achieving torque control of the vehicle mainly relies on the engine controller 4031, the motor controller 4032, and the hydraulic brake controller 4033 for control and adjustment. As shown in FIG. 4, this is reflected in the vehicle as an engine 4041, a motor 4042, and a hydraulic system 4043 performing corresponding adjustments to control power.

In the embodiment, the torque control module 402 further includes a control request interface for a total wheel-end demand torque and a control request interface for wheel-end torques of front and rear axles. A demand torque of a scenario mainly includes a distribution ratio of torques of the front and rear axles and the total wheel-end demand torque. Hence, in the torque control module 402, the control request interface for the total wheel-end demand torque and the control request interface for the wheel-end torques of the front and rear axles are used to obtain a current torque demand of the vehicle in a driving state. The torque control module 402 may determine, according to the accelerator and brake signals, a possible demand torque scenario which the vehicle may be in, such that information of the corresponding demand torque scenario is activated. Hence, the control request interface for the total wheel-end demand torque and the control request interface for the wheel-end torques of the front and rear axles need to be set.

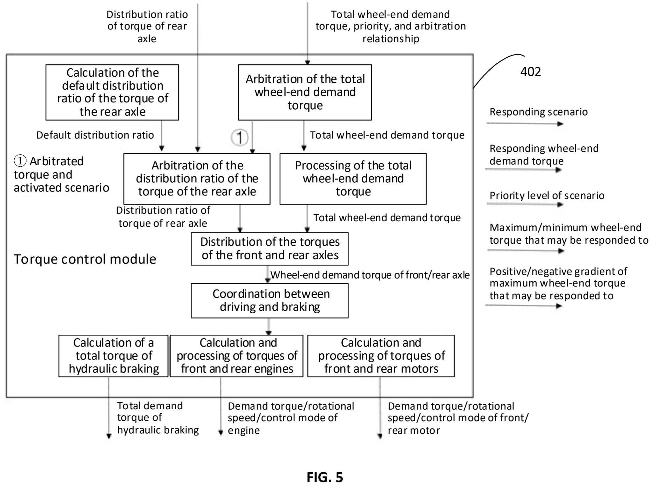

Specifically, as shown in FIG. 5, in the torque control module 402, a torque control service provides control request interfaces for the total wheel-end torque and the wheel-end torques of the front and rear axles for each demand torque scenario. The main input of the torque control module 402 includes, but is not limited to, the total wheel-end demand torque, priorities, arbitration relationships, rear-axle distribution, etc., as well as a demand torque, a priority, an arbitration relationship, etc., of each demand torque scenario. The main output of the torque control module 402 is a demand torque for the power execution module 403, such as a demand torque or rotational speed of an engine, a demand torque or rotational speed of a motor, and a demand torque of a hydraulic brake system. The intermediate torque control module 402 specifically further needs to process data by steps such as arbitration of a distribution ratio of the torque of the rear axle, processing of the total wheel-end demand torque, distribution of the torques of the front and rear axles, coordination between driving and braking, calculation of a total torque of hydraulic braking, calculation and processing of torques of front and rear engines, and calculation and processing of torques of front and rear motors. Such process may be handled by existing software or a control program according to a set calculation rule, and thus is not elaborated in the embodiment. Additionally and more specifically, the torque control module 402 is supposed to output signals including, but not limited to, the following: a name of a responding scenario, a priority level of a corresponding scenario, a responding wheel-end demand torque, the maximum/minimum wheel-end torque that may be responded to, a positive/negative gradient of the maximum wheel-end torque that may be responded to, etc.

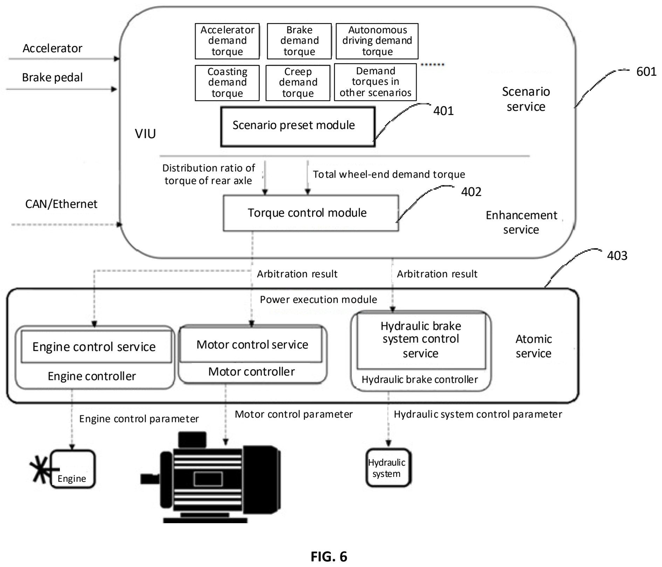

As shown in FIG. 6, an embodiment further provides an Electrical/Electronic (EE) architecture for centralized torque control using a system for torque control service. A torque control service is achieved in a Vehicle Information Unit (VIU) 601. Accelerator and brake pedal hardline signals are input into the vehicle information unit together, which enables simultaneous calculation and arbitration of drive and brake torques within the same controller, avoids a signal delay caused by a conventional architecture where accelerator and brake signals are separately input into two controllers and then communicate via a Controller Area Network (CAN) or Ethernet, and reduces communication and coordination costs resulting from the relatively independent design and development of driving and braking by the original equipment manufacturer and the supplier respectively.

Based on the system for torque control service, torque control may be divided into a three-tier software architecture. The top tier is a scenario service, which corresponds to the scenario preset module 401. The intermediate tier is an enhancement service, which corresponds to the torque control module 402. The bottom tier is an atomic service, which corresponds to the power execution module 403. The scenario service corresponds to sources of various required torques. Different sources represent different scenarios, and different scenarios have different requests for the wheel-end torque and the distribution ratio of the rear axle. In the scenario service tier, scenario preset is performed, and necessary gradient limitations and filtering designs are performed. The enhancement service primarily functions to: arbitrate the principle of arbitration and calculation corresponding to each demand torque scenario, obtain an arbitration result, and process and output the arbitration result. The atomic service controls parts at the execution end of each torque control, and includes, but is not limited to, an engine control service, a motor control service, and a hydraulic brake system control service, which respectively correspond to controls of the engine controller, the motor controller, and the hydraulic brake controller. The tiered software architecture makes torque control more concise and intuitive, facilitates the distinction of development work in various fields, and reduces the communication cost for team development.

An embodiment further provides a vehicle, including the above-mentioned system for torque control service.

The above embodiments are merely preferred embodiments for fully illustrating the present invention, and the scope of protection of the present invention is not limited to these embodiments. Equivalent substitutions or variations made by those skilled in the art on the basis of the present invention all fall within the scope of protection of the present invention.

## Claims

1. A method for torque priority arbitration, comprising:
obtaining a current torque demand of a vehicle in a driving state, matching a preset demand torque scenario, and activating one or more demand torque scenarios;
calculating and outputting a final arbitration result based on a preset priority, a preset demand torque, and a preset torque arbitration operational relationship of each demand torque scenario, wherein a torque arbitration operational relationship between demand torque scenarios with a same priority represents an operational relationship between the demand torque scenario and another demand torque scenario with the same priority, and a torque arbitration operational relationship between demand torque scenarios with different priorities represents an operational relationship between a result of a same-precedence operation with the priority and a result of a same-precedence operation with a lower priority; directly outputting an arbitration result in a case where only one demand torque scenario is activated; and sequentially executing torque arbitration operational relationships with different priorities from high to low in a case where at least one demand torque scenario is activated, wherein the result of the same-precedence operation with the priority is calculated by the torque arbitration operational relationship between different demand torque scenarios with the same priority, and the final arbitration result is calculated and output by substituting the result of the same-precedence operation into calculation of the torque arbitration operational relationship between different priorities; and
controlling, according to the arbitration result, the vehicle to perform corresponding torque control.

2. The method for torque priority arbitration according to claim 1, wherein levels of the preset priorities are represented by natural numbers, the larger a numeral value, the higher a level of a priority, and in a case where a numeral value of a priority of a demand torque scenario is 0, it is indicated that the priority of the demand torque scenario is the lowest, and a torque arbitration operational relationship corresponding to the demand torque scenario does not participate in calculation.

3. The method for torque priority arbitration according to claim 2, wherein the preset torque arbitration operational relationship comprises: none, summation (+), subtraction (-), minimum (MIN), and maximum (MAX), wherein none indicates that there is no further operational relationship between a result of a same-precedence operation of the demand torque scenario with the priority and a result of a same-precedence operation of a demand torque scenario with a lower priority, summation (+) indicates a summation operation between different demand torque scenarios or different priorities, subtraction (-) indicates a subtraction operation between different demand torque scenarios or different priorities, minimum (MIN) indicates a minimum operation between different demand torque scenarios or different priorities, maximum (MAX) indicates a maximum operation between different demand torque scenarios or different priorities, and the torque arbitration operational relationship between different demand torque scenarios with the same priority is set to be none and/or summation (+), subtraction (-), minimum (MIN), or maximum (MAX).

4. The method for torque priority arbitration according to any one of claims 1 to 3, wherein the preset demand torque scenario originates from an accelerator demand torque, a creep demand torque, a coasting demand torque, a braking feedback demand torque, an autonomous driving demand torque, an intelligent steering demand torque, a hill assist demand torque, a parking assist demand torque, a maximum demand torque set by a driver, a maximum demand torque limited by a vehicle speed, and a demand torque limited by a motor battery.

5. The method for torque priority arbitration according to any one of claims 1 to 4, wherein the preset demand torque comprises a distribution ratio of torques of front and rear axles and a total wheel-end demand torque.

6. The method for torque priority arbitration according to any one of claims 1 to 5, wherein the arbitration result comprises a value of an output demand torque, a name of a scenario with a highest priority, and a priority level.

7. A system for torque control service, comprising a scenario preset module, a torque control module, and a power execution module, with signals transmitted sequentially, wherein a plurality of demand torque scenarios and a scenario name, a priority level, and a demand torque corresponding to each demand torque scenario are set in the scenario preset module, the torque control module obtains an arbitration result by calculation using the method for torque priority arbitration according to any one of claims 1 to 6, and the arbitration result is output to the power execution module for execution.

8. The system for torque control service according to claim 7, wherein the power execution module comprises an engine controller, a motor controller, and a hydraulic brake controller.

9. The system for torque control service according to claim 7 or 8, wherein the torque control module further comprises a control request interface for a total wheel-end demand torque and a control request interface for wheel-end torques of front and rear axles.

10. A vehicle, comprising the system for torque control service according to any one of claims 7 to 9.
